# EUROPÄISCHE PATENTSCHRIFT

(11) **EP 2 731 984 B1**
(45) Veröffentlichungstag und Bekanntmachung des Hinweises auf die Patenterteilung: **09.03.2016**
(21) Anmeldenummer: 12738018.6
(22) Anmeldetag: 13.07.2012
(51) Int. Cl.: B32B 5/24, C08J 9/34, G10K 11/162, G10K 11/168

(54) **ERHÖHUNG DER SCHALLABSORPTION IN SCHAUMSTOFF-DÄMMSTOFFEN**
INCREASING THE SOUND ABSORPTION IN FOAM INSULATING MATERIALS
ACCROISSEMENT DE L'ABSORPTION ACOUSTIQUE DANS DES MATÉRIAUX D'ISOLATION EN MOUSSE

(30) Priorität: 13.07.2011 DE 102011107693
(43) Veröffentlichungstag der Anmeldung: 21.05.2014
(73) Patentinhaber: Otto Bock Kunststoff GmbH, 37115 Duderstadt (DE)
(72) Erfinder: GANSEN, Peter, 37136 Seeburg (DE)
(74) Vertreter: Lins, Martina
(86) Internationale Anmeldenummer: PCT/DE2012/000711
(87) Internationale Veröffentlichungsnummer: WO 2013/007243

(56) Entgegenhaltungen:
- WO-A1-2009/106236
- WO-A1-2010/030975
- WO-A2-2012/067841
- DE-A1-102005 049 788
- DE-A1-102007 028 253

## Beschreibung

Die Erfindung betrifft die Erhöhung der Schallabsorption in Schaumstoff-Dämmstoffen und einen Schallabsorber mit einem wenigstens in seinem Kernbereich offenzelligen Schallabsorptionsschaumstoff.

Zu den Dämmstoffen, die ausschließlich oder unter anderem zur Schalldämmung dienen sollen, zählen als eine wesentliche Gruppe dämmende Schaumstoffe. Diese Schaumstoffe können ausschließlich für die Schalldämmung vorgesehen sein oder gleichzeitig zur Wärmeisolation dienen. Schalldämmstoffe sollen Schall "schlucken" und so von bestimmten Räumen oder der Umgebung fernhalten.

Bei der Schalldämmung - es wird auch von Schallisolation gesprochen - geht es in der Regel um die Dämmung von Körperschall oder Luftschall. Dabei ist eine vollständige Absorption häufig schwer zu erreichen. Zum einen kann meist weder die Schallreflektion noch die Schalltransmission vollständig verhindert werden, zweitens kann die vollständige Abschirmung der Schallquelle ein Problem darstellen. Gelegentlich ist die Schallreflektion auch gewünscht, beispielsweise zur Verbesserung einer Raumakustik. Schließlich ist die Schallabsorption auch von der zu absorbierenden Frequenz bzw. dem Frequenzspektrum abhängig. Akustikschäume können beispielsweise in Form von Schallschutzmatten eingesetzt werden, deren Schalldämmung häufig durch eine Oberflächenstruktur - Pyramidenstruktur, Noppenstruktur, oder ähnliches - unterstützt wird. Schwerschaumstoffmatten können mit hochviskosen Flüssigkeiten getränkt sein oder schwere Füllstoffe enthalten (z.B. Ba₂SO₄), um das Flächengewicht bzw. die Dichte zu erhöhen. Sie dienen dann in erster Linie zur Schallabsorption im niedrigen Frequenzbereich.

Ein Weg zur Verringerung der Schallintensität besteht in der tatsächlichen Schallabsorption, d.h. der Umwandlung von Schallenergie in andere Energieformen, in der Regel in Wärme. Das erzielte Maß der Schalldämpfung oder Schallabsorption wird häufig mit Hilfe eines Absorptionskoeffizienten charakterisiert oder mit Hilfe des Schallabsorptionsgrades α. Dabei ist der Absorptionskoeffizient zwischen 0 und 1 umso höher, je mehr Schallenergie absorbiert wurde und wird bei vollständiger Absorption der Schallenergie 1. Der Absorptionsgrad α entspricht dem Absorptionskoeffizienten in %. Dem Absorptionskoeffizienten 1 entspricht demnach ein Absorptionsgrad a von 100 %.

Aus der DE 10 2004 054 646 ist es bekannt, einen offenzelligen Polyurethanschaumstoff - in diesem Zusammenhang auch Feder genannt - zur Absorption des Luftschalls mit Hilfe der offenzelligen Poren mit einem schwereren Material - auch Masse genannt - zu kombinieren, wobei die Masse aus einem mit Schwerstoffen versetzten Polyurethan besteht. Die Masse, d.h. das schwerere Material, dient zur Absorption des Körperschalls und Reflektion des Luftschalls. Als Schwerstoff kann z.B. Bariumsulfat eingesetzt werden.

Aus der DE 27 35 153 A1 ist ein Feder-Masse-System in Form einer Schallschutz-Doppelmatte bekannt. Die Doppelmatte besteht aus zwei verschieden dichten Polyurethanschäumen, von denen der dichtere mit einem Schwerfüllstoff, nämlich Bariumsulfat, Schiefermehl oder Kreide, gefüllt ist. Wegen des hohen Füllstoffanteils sind besondere Polyurethanzusammensetzungen erforderlich.

Flammgeschützte Polyurethan-Weichformschaumstoffe sind einschließlich eines besonderen Herstellverfahrens beispielsweise aus der WO 2009/106236 A1 bekannt. Darin wird die Verwendung verschiedener flammhemmender Feststoffe, u.a. von Blähgraphit, beschrieben, wobei der Anteil an dem flammenhemmenden Feststoff in einem Oberflächenbereich oder einer Oberflächenschicht größer ist als im inneren Bereich des Formschaumkörpers.

Aus der DE 10 2005 049 788 A1 ist eine intumeszierende Brandschutzplatte bekannt, die einen Kern aus Polyurethan mit einem intumeszierenden Gemisch und wenigstens eine brennbare, außen angeordnete Deckschicht, beispielsweise aus Papier oder Pappe, umfasst. Die Brandschutzplatte ist im präventiven Brandschutz als Konstruktionselement und Verkleidungselement einsetzbar.

Aus der DE 10 2007 028 253 A1 ist ein spezieller silikonhaltiger Polyurethanschaum bekannt, der Aufblätterungsgraphit zur weiteren Verbesserung des Flammschutzes enthält.

Die nicht vorveröffentlichte WO 2012/067841 A2 beschreibt einen flammgeschützten flexiblen Polyurethanschaum, bei dem gute Flammresistenz mit Geräuschdämmung und Vibrationshemmung verbunden ist. Als Flammschutzmittel wird hierfür eine Kombination aus rotem Phosphor, Blähgraphit und ggf. Natriumcitrat eingesetzt.

Auch geschlossenzellige, gleichzeitig wärmeisolierende Polyurethanschäume sind bekannt, beispielsweise aus der DE 103 10 907 B3.

Bei den bekannten Schallisolationsmaterialien ist nachteilig, dass sie anorganische Schwerstoffe verwenden, deren Verfügbarkeit oder Umweltverträglichkeit häufig begrenzt ist. Alternativ hierzu werden die verschiedenen Dichten innerhalb von Schaumstoffen auch mit komplizierten Verfahren eingestellt, die aufwendig und teuer sein können.

Der Erfindung liegt die Aufgabe zugrunde, mit relativ einfachen Mitteln einen kostengünstigen Schalldämmstoff zur Verfügung zu stellen, der eine verbesserte Schallabsorptionswirkung bei gleichzeitig vorhandener Schallisolationswirkung aufweist.

Die Erfindung beruht auf der überraschenden Beobachtung, dass Blähgraphit als Additiv in Luftschallabsorbern, insbesondere aus Schaumstoffen, über ein breites Frequenzspektrum eine Verbesserung der Schallabsorption bewirkt. Dies gilt speziell für Luftschallabsorber mit vergleichsweise höherem Raumgewicht, die eine bessere Schallisolation zeigen als von Hause aus gute Luftschallabsorber mit niedrigem Raumgewicht.

Die Aufgabe der Erfindung wird durch die Verwendung von Blähgraphit gemäß Anspruch 1, den Schallabsorber gemäß Anspruch 8 und das Konstruktionsteil gemäß Anspruch 13 gelöst.

Zwar war es aus der DE 41 30 335 A1 bereits bekannt, vorexpandierten Blähgraphit unter Zusatz von Salzen in porösen Platten aus überwiegend anorganischem Material u. a. für Schallschutzzwecke zu verwenden. Diese Platten sind jedoch hart und spröde und haben ein sehr begrenztes Einsatzgebiet.

Blähgraphit ist ein Graphit mit eingelagerten Fremdmolekülen. Dabei sind zwischen den Kohlenstoffschichten des Graphits sogenannte Blähsalze oder "Graphit Intercalation Compounds (GIC)" eingelagert (interkaliert). Bei den eingelagerten Molekülen handelt es sich meist um Schwefel- oder Stickstoffverbindungen, z.B. SO₂. Die Eigenschaften des Blähgraphits ergeben sich aus der Art und Menge der Interkalationsverbindungen sowie aus deren Verteilung innerhalb der Graphitschichten. Unter Hitzeeinwirkung werden die Schichten durch Thermolyse auseinandergetrieben und expandieren zu einer porösen Masse, deren Endvolumen das Mehrhundertfache des Ausgangsvolumens betragen kann. Je nach Blähgraphitsorte beginnt die Expansion bei unterschiedlichen Temperaturen. Die Expansion kann dabei schlagartig erfolgen. Blähgraphite werden anhand ihrer Starttemperaturen und des Blähvermögens charakterisiert. Sie werden sehr häufig für Intumeszenzbeschichtungen bzw. den Flammschutz verwendet. Alternativ dient er beispielsweise als Absorptionsmittel für Flüssigkeiten, z.B. Öle. Da Blähgraphit hierfür in großer Menge nachgefragt wird, ist er preisgünstig verfügbar. Blähgraphit ist schwermetallfrei und daher relativ umweltfreundlich. Innerhalb von Schaumstoffen wird er für den Flammschutz bei Möbelschaumstoffen und Matratzen eingesetzt.

Auch unterhalb der Expansionstemperatur sind die Graphitschichten des Blähgraphits relativ leicht zueinander verschiebbar, wobei sie Energie absorbieren können. Hierauf wird derzeit die Fähigkeit zur Schallabsorption zurückgeführt, ohne dass die theoretischen Hintergründe hierfür bereits geklärt wären. Der Blähgraphit oder die durch den Blähgraphit verursachte Schaumstruktur scheint in der Lage zu sein, Schallenergie gut aufzunehmen, ohne dass dabei eine Expansion eintritt, was aufgrund des starken Expansionsvolumens unerwünscht wäre.

Grundsätzlich kann jede Art von Blähgraphit innerhalb des Dämmstoffes zum Einsatz kommen. Derzeit wird, ohne Festlegung auf eines bestimmte Theorie, davon ausgegangen, dass alle Blähgraphite mit ihren durch Interkalation verschieblicher gemachten Schichten zur Energieaufnahme für die Schallenergie befähigt sind.

Es ist derzeit bevorzugt, einen Blähgraphit zu verwenden, dessen durchschnittlicher Aggregatdurchmesser zwischen 0,3 und 1,5 mm liegt. Der Aggregatdurchmesser bezieht sich dabei auf den größten Durchmesser eines sphärisch, länglich oder irregulär geformten Aggregats aus Graphitplättchen, Die Blahgraphit-Aggregate bezeichnet man auch als Flocken. Die Einzeldurchmesser werden beispielsweise optisch (z. B. durch Vermessen am Mikroskop) bestimmt und die erhaltenen Werte werden gemittelt.

Die Starttemperatur des eingesetzten Blähgraphits soll größer oder gleich 180 °C betragen, was für die meisten Qualitäten gegeben ist. Vorzugsweise kann der Blähgraphit eine Starttemperatur größer gleich 200 °C oder noch bevorzugter 250 °C besitzen. Die entsprechenden Blähgraphite werden bei ihrer erfindungsgemäßen Verwendung entsprechend dem geplanten Einsatzzweck ausgewählt. Dabei soll vermieden werden, dass bei einer gegebenenfalls auch zufälligen thermischen Belastung des Schalldämmmaterials eine ungewollte Expansion des Graphits eintritt, d.h. der Blähgraphit wird erfindungsgemäß immer im nichtexpandierten Grundzustand eingesetzt und soll für seine Schalldämmfunktion im Schaumstoff weder bei der Herstellung noch bei Gebrauch expandieren.

Die ausgewählten Schalldämm- bzw. Schallabsorptionsschaumstoffe sind vorzugsweise offenzellig oder im Falle von Integralschäumen im Kernbereich, d.h. außer in einer verdichteten Oberflächenschicht, offenzellig.

Die bei der erfindungsgemäßen Verwendung eingesetzten Schallabsorptionsschaumstoffe besitzen eine Dichte von größer gleich 150 g/l, bevorzugt größer gleich 200 g/l, und kleiner gleich 350 g/l, insbesondere kleiner gleich 300 g/l.

Die Dichte hat einen starken Einfluss auf die Schallisolationseigenschaften. Die genannten bevorzugten Dichtebereiche haben sich im Zusammenwirken mit dem Blähgraphit-Zusatz als besonders vorteilhaft erwiesen. Sie bieten eine gute Schallabsorptions- und Schallisolationswirkung. Sie gelten insbesondere bei der Verwendung von Polyurethanweich- oder -integralschaumstoffen.

Ein mit Blähgraphit versetzter Schaumstoff kann solche Akustikschäume ersetzen, die bislang mit Schwerstoffen versetzt waren. Durch die erfindungsgemäße Verwendung von Blähgraphit können herkömmliche Masse-Feder-Systeme ersetzt werden. Da eine gute Schallabsorption über einen größeren Frequenzbereich erzielt wird, erübrigt sich häufig die Verwendung mehrerer Schalldämm-Materialien in einem Schallabsorber bzw. Schall dämmenden Konstruktionsteil. Ein einheitlicher Dämmstoff nach der Erfindung ergibt für viele Anwendungsfelder befriedigende Schallabsorptionsergebnisse.

Ein erfindungsgemäß verwendeter Schallabsorptions-Weichschaumstoff mit erhöhter Schallabsorption durch die Verwendung von Blähgraphit kann in bevorzugten Ausführungsformen in Form von Rollenmaterial oder Platten vorliegen, wobei Strukturoberflächen, wie Pyramiden- oder Noppenoberflächen, zusätzlich zum Einsatz kommen können. Ein erfindungsgemäßer Schallabsorptions-Weichschaum mit Blähgraphit kann auch zu beliebig dreidimensional ausgebildeten Körpern zugeschnitten werden.

Ein erfindungsgemäß verwendeter Schallabsorptions-Integralschaum, bei dem Blähgraphit zur Schallabsorption verwendet wird, kann bevorzugt unmittelbar in der Form zu den gewünschten Bauteilen aufgeschäumt werden. In der Außenzone kann sich der Schaumstoff verdichten, so dass ein Schallabsorber mit Masse und Feder entsteht. Der Blähgraphit kann in eine oder mehrere schaumbildende Komponenten eingebracht sein, um am Ende des Herstellungsprozesses das gewünschte blähgraphithaltige Material zu ergeben.

Es ist bevorzugt, dass 3 bis 60, vorzugsweise 5 bis 50 Gewichtsteile Blähgraphit auf 100 Gewichtsteile eines Schallabsorptionsschaumstoffes eingesetzt werden.

Bei der erfindungsgemäßen Verwendung in Polyurethanschaumstoffen ist es besonders bevorzugt, wenn 5 bis 40 Gewichtsteile Blähgraphit auf 100 Gewichtsteile der isocyanatreaktiven Komponente, vorzugsweise auf 100 Gewichtsteile der Polyol-Komponente, enthalten sind.

Bei der Verwendung in Schallabsorptions-Schaumstoffen erfolgt die Herstellung auf günstigste Weise, indem der Blähgraphit in der üblichen feinteiligen oder flockenförmigen Form in wenigstens eine der schaumbildenden Komponenten eingemischt wird, bevor die Masse aufgeschäumt wird. Der erfindungsgemäße Dämmstoff besitzt besonders gute akustische Eigenschaften im Sinne einer Schallabsorption und bzw. Schallisolierung. Sowohl die Schallreflektion als auch die Schalltransmission werden deutlich vermindert.

Überraschenderweise wurde jedoch bei den neuen Schallabsorptions-schaumstoffen mit Blähgraphitgehalt gefunden, dass sich zusätzlich die thermische Stabilität des Schaumstoffs erhöht, nämlich dass die plastische Verformbarkeit des Materials unter Eigengewicht (über mehrere Tage bei 150 °C Testtemperatur gemessen) abnimmt. Die zusätzliche Verbesserung der thermischen Stabilität bei gleichzeitiger Verbesserung der Schallabsorption ist unerwartet und verbessert die Eigenschaften des Dämmstoffs bzw. des daraus gebildeten Schallabsorbers insgesamt. Der Effekt tritt bei (nicht erfindungsgemäßen) niedrigen Raumgewichten nicht auf.

Die besonders guten Schallabsorptionseigenschaften ergeben sich innerhalb der im Rahmen der Erfindung ermittelten bevorzugten Dichtebereiche.

Der bevorzugte Polyurethanschaum kann ein üblicher Weichschaum oder Integralschaum sein. Bevorzugt handelt es sich um einen wenigstens in seiner Kernphase, d.h. bei Integralschaum abgesehen von einer Oberflächenschicht, die auch als Haut oder Verdichtungszone bezeichnet wird, offenzelligen Schaum.

Diese Schaumstoffe sind dem Fachmann seit langem bekannt und müssen daher in ihrer Chemie hier nicht detailliert beschrieben werden.

Ihre Herstellung erfolgt durch die Umsetzung von organischen Polyisocyanaten, beispielsweise MDI oder TDI, die chemisch modifiziert sein können oder auch in Form von Prepolymeren eingesetzt werden können, mit höherfunktionellen Verbindungen mit mindestens zwei reaktiven Wasserstoffatomen, der sogenannten isocyanatreaktiven Komponente. Bei der Isocyanat-reaktiven Komponente handelt es sich häufig um Polyoxyalkylenpolyamine oder Polyhydroxylverbindungen, insbesondere Polyole oder Polyetheralkohole mit Molekulargewichten zwischen beispielsweise 300 und 20000. Gegebenenfalls werden Kettenverlängerungs- und/oder Vernetzungsmittel zugegeben, bei denen es um relativ niedermolekularere isocyanatreaktive oder mit OH-Gruppen oder aktivem Wasserstoff reagierende Komponenten handelt, häufig mit Molekulargewichten zwischen 100 und 500 und Funktionalitäten zwischen 2 und 10. Die Reaktionsmischung enthält üblicherweise zusätzlich Katalysatoren, Treibmittel, Hilfsmittel und/oder Zusatzstoffe, wie z.B. Füllstoffe, Farbstoffe, Lichtschutzmittel, Stabilisatoren und dergleichen sowie gegebenenfalls geringe Mengen an Wasser.

Für eine zusammenfassende Übersicht über die Herstellung von Polyurethan-Integral- und Weichschaumstoffen wird verwiesen auf das Handbuch von Günther Oertel (Ed.) Hansa, München 1994 "Polyurethane Handbook", insbesondere Kapitel 3, 5 und 7.

Die Schalldämmstoffe, bei denen der Blähgraphit erfindungsgemäß zum Einsatz kommt, können in Weiterbildung der Erfindung innerhalb eines Konstruktionsteils aus mehreren Schichten oder eines komplexen Bauteils eingesetzt werden.

Die Lösung der Aufgabe umfasst weiterhin einen Schallabsorber mit einem im Kernbereich offenzelligen Schallabsorptionsschaumstoff aus einem Polyurethan-Integralschaum, wie oben beschrieben, mit einer Dichte ρ größer gleich 150 g/l und einem Gehalt von wenigstens 5 Gewichtsteilen Blähgraphit auf 100 Gewichtsteile an isocyanatreaktiver Komponente, insbesondere Polyol.

Der Schallabsorber kann bevorzugt zur Schallabsorption in Motorräumen von Kraftfahrzeugen eingesetzt werden, da er gleichzeitig, wie oben ausgeführt, in einem Arbeitsbereich bis ca. 160 °C von guter thermischer Stabilität ist. Bevorzugte Anwendungen betreffen die Schallisolation in Benzinpumpenabdeckungen und Motorraumabdeckungen.

Der Schallabsorber kann vollständig aus dem erfindungsgemäßen Schallabsorptions-Schaumstoff bestehen oder in einem Bauteil mit diesem verbunden sein. Der Schallabsorber kann ebenfalls mehrschichtig aufgebaut sein oder aus mehreren Integralschaumstoff-Formteilen bestehen. Auf diese Weise ist es möglich besondere Raumverteilungen von Masse und Feder zu verwirklichen.

In bevorzugten Ausführungsbeispielen ist der Blähgraphitgehalt so eingestellt und auf die Dichte des Schaumstoffs abgestimmt, dass der Schallabsorptionsschaumstoff eine Verbesserung des Schallabsorptionsgrades α, gemessen bei 2000 Hz, gegenüber einem ohne den Blähgraphit erzeugten, ansonsten entsprechenden Referenzschaum gleicher Dichte von Δα größer oder gleich 5 % aufweist.

Der Blähgraphit ist wiederum ein solcher, der bei einer Temperatur größer gleich 180 °C und bevorzugt 250 °C expandiert. Dies ermöglicht den sicheren Einsatz bei Bedingungen weit über Raumtemperatur und beispielsweise auch im Karosseriebereich und im Motorraum von Kraftfahrzeugen, Flugzeugen und Schiffen.

Die erfindungsgemäßen Schallabsorber erfüllen zugleich den vertikalen Brandtest UL 94, internationale Norm, mit der Einstufung V-0.

Der Schallabsorptionsschaumstoff des Schallabsorbers ist erfndungsgemäß ein Polyurethan-Integralschaum, der bevorzugt unter Verwendung langkettiger Polyole, d.h. reaktiver Polyole mit einer OH-Zahl kleiner 100 unter Zusatz von Kettenverlängerern und/oder Vernetzern, mit einem Isocyanat, wie dem Fachmann für die Integralschaumherstellung bekannt, d.h. vorzugsweise wenigstens einem aromatischen Isocyanat mit einer Funktionalität zwischen 2,0 und 2,5, ggf. unter Zusatz physikalischer oder chemischer Treibmittel, hergestellt wird. Die Kettenverlängerer, die bevorzugt difunktionell sind, werden vorzugsweise in einem Anteil zwischen 3 und 11 Gew.-% eingesetzt. Die Grenze zwischen Kettenverlängerern und Vernetzern kann fließend sein. Gegebenenfalls können spezielle Vernetzer zusätzlich zu den Kettenverlängerungsmitteln eingesetzt werden. Gemäß einer besonders bevorzugten Ausführungsform werden zusätzlich auf je 100 Gewichtsteile des Polyols 0,1 bis 1 Gewichtsteile Wasser zugesetzt. Übliche Hilfs- und Zusatzstoffe, bzw. Additive können vorhanden sein.

Alle Schaumstoffe können die üblichen Additive enthalten, wie oben schon beschrieben.

In einer besonders bevorzugten Ausführungsform umfasst der Schallabsorber einen PU-Schallabsorptionsschaumstoff, der in Form eines Polyurethan-Integralschaum-Formteils mit einer äußeren Verdichtungszone (Haut) von 0,5 bis 5 mm Dicke vorliegt, wobei das Integralschaumteil in wenigstens einem Bereich, d.h. einem oder mehreren räumlich getrennten Bereichen, der Formteiloberfläche, nämlich an einer einem Schallerzeuger zugewandten Seite, eine Haut mit einer Dicke kleiner oder gleich 0,1 mm aufweist. Das Formteil des Schallabsorbers kann gegebenenfalls bearbeitet und/oder mit anderen Materialien verbunden sein. Als Bearbeitung kann auch vorgesehen sein, dass das Formteil nach dem Entformen geschnitten wird.

Weiter bevorzugt ist es, wenn das Polyurethan-Integralschaum-Formteil in dem wenigstens einem Bereich der Formteiloberfläche, wie oben beschrieben, offenzellig vorliegt und keine Haut aufweist, was durch eine Schnittfläche zu erzielen ist. Diese kann, falls gewünscht, in Ihrer Geometrie an die Oberfläche eines Schallerzeugers angepasst werden.

Die Erfindung umfasst schließlich auch ein Konstruktionsteil, das einen Schallabsorber, wie vorstehend beschrieben, enthält. Dabei kann es sich um ein komplexeres Bauteil handeln, das beispielsweise den Schallabsorber nach der Erfindung eingebettet in konstruktionsbedingte Hohlräume enthalten kann.

### BEISPIELE UND TESTERGEBNISSE

Folgende Komponenten wurden für die Beispiele 1 bis 14 laut beigefügter Tabelle 1 verwendet (Beispiele 1 - 9 erfindungsgemäß, 10 - 14 Vergleichsbeispiele):

### Polyol 1:

85 Gew.-Teile eines trifunktionellen Polyetherpolyols mit 13 % endständig polymerisierten Oxyethylengruppen und einer OH-Zahl von 35 (Polyol A),
15 Gew.-Teile eines trifunktionellen Polyetherpolyols mit 20 % Füllstoff PHD und 17,5 % endständig polymerisierten Oxyethylengruppen mit einer OH-Zahl von 28 (Polyol B),
10 Gew.-Teile Monoethylenglykol,
0,4 Gew.-Teile Bis-(dimethylaminopropyl)methylamin,
1,0 Gew.-Teile Wasser,
0,05 Gew.-Teile Fomrez UL 28 (Stammansatz 10 %) der Fa. Momentive,
1,0 Gew.-Teile Tegostab^{®} B 4690 der Fa. Evonik Industries,
0,1 Gew.-Teile 2-Methylpentamethylendiamin,
10 Gew.-Teile Diphenylkresylphosphat,
5 Gew.-Teile 1,1,1,3,3-Pentaffuorpropan.

### Polyol 2:

85 Gew.-Teile Polyol A,
15 Gew.-Teile Polyol B,
10 Gew.-Teile Monoethylenglykol,
0,4 Gew.-Teile bis-(dimethylaminopropyl)methylamine,
1,0 Gew.-Teile Wasser
0,05 Gew.-Teile Fomrez UL 28 (Stammansatz 10 %) der Fa. Momentive,
1,0 Gew.-Teile Tegostab^{®} B 4690 der Fa. Evonik Industries,
0,1 Gew.-Teile 2-Methylpentamethylendiamin,
10 Gew.-Teile Diphenylkresylphosphat.

### Polyol 3 (für die Referenzbeispiele für einen Schaum geringerer Raumdichte (siehe Tabelle Beispiele 13 und 14):

85 Gew.-Teile eines trifunktionellen Polyetherpolyols mit 17,6 % endständig polymerisierten Oxyethylengruppen und einer OH-Zahl von 28,
15 Gew.-Teile Polyol B,
0,4 Gew.-Teile Bis-(dimethylaminopropyl)methylamin,
3,0 Gew.-Teile Wasser,
0,1 Gew.-Teile Dibutylzinndilaurat,
1,2 Gew.-Teile Tegostab^{®} B 4690 der Fa. Evonik Industries,
0,8 Gew.-Teile 2-Methylpentamethylendiamin,
10 Gew.-Teile Diphenylkresylphosphat.

### Isocyanat 1:

20 Gew.-Teile MDI mit 77 % Monomer, 23 % Polymer und 20 % Prepolymer,
80 Gew.-Teile monomeres MDI mit 23 % Carbodiimid.

### Isocyanat 2 (für die Referenzbeispiele für einen Schaum geringerer Raumdichte (siehe Tabelle);

70 Gew.-Teile Desmodur^{®} T 80 (Handelsprodukt der Bayer AG),
30 Gew.-Teile Desmodur^{®} 44 V 20 (Handelsprodukt der Bayer AG).

Blähgraphit 1: durchschnittliche Flockengröße 0,4 mm.
Blähgraphit 2: durchschnittliche Flockengröße 0,7 mm.
Blähgraphit 3: durchschnittliche Flockengröße 1,1 mm.

Zur Herstellung der Polyurethanschäume wurde das entsprechende Polyol (1-3) mit dem Isocyanat (1 oder 2) bei 4000 U/min mit einem Heidolph Rührapparat, ausgestattet mit einem Vier-Flügel-Rührer, dessen Enden 90° angewinkelt sind, vermischt und in eine quaderförmige Metallform eingebracht.

Die Integralschaumform (Beispiele 1 - 12) konnten bei einer Werkzeugtemperatur von 45 °C nach 10 min entformt werden.

Die Weichschaumformteile (Beispiele 13 und 14) waren bei einer Werkzeugtemperatur von 60 °C nach 7 min entformbar.

### Hinweis:

Die akustischen Austestergebnisse wurden in Zusammenarbeit mit dem BIK, Institut für integrierte Produktentwicklung & Steinbeistransferzentrum 660 in Bremen erarbeitet.

**Tabelle 1**

| | Polyol | Isocyanat | Mischungsverhältnis | Gesamtdichte (kg/m³) | Zugfestigkeit (kPa) | Bruchdehnung (%) | Absorption im Impedanzrohr bei Frequenz 2000 Hz |
|---|---|---|---|---|---|---|---|
| | | | Polyol:Isocyanat | | DIN EN ISO 1789 | DIN EN ISO 1789 | |
| Beispiel 1 | Polyol 1 | Isocyanat 1 | 100:53 | 200 | Haut 981 | Haut: 86 | 0,38 |
| | | | | | Schaum: 760 | Schaum: 115 | |
| Beispiel 2 | Polyol 1 + 30 GT | Isocyanat 1 | 100:43 | 200 | Haut: 556 | Haut 58 | 0,72 |
| | Blähgraphit 1 | | | | Schaum: 312 | Schaum: 66 | |
| Beispiel 3 | Polyol 1 + 30 GT | Isocyanat 1 | 100:43 | 200 | Haut: 484 | Haut 53 | 0,72 |
| | Blähgraphit 2 | | | | Schaum: 326 | Schaum: 66 | |
| Beispiel 4 | Polyol 1 + 30 GT | Isocyanat 1 | 100:43 | 200 | Haut: 481 | Haut 54 | 0,91 |
| | Blähgraphit 3 | | | | Schaum: 335 | Schaum: 50 | |
| Beispiel 5 | Polyol 1 + 20 GT | Isocyanat 1 | 100:46 | 200 | Haut: 541 | Haut: 54 | 0,53 |
| | Blähgraphit 3 | | | | Schaum: 486 | Schaum: 68 | |
| Beispiel 6 | Polyol 1 + 10 GT | Isocyanat 1 | 100:50 | 200 | Haut: 736 | Haut 71 | 0,57 |
| | Blähgraphit 3 | | | | Schaum: 681 | Schaum: 107 | |
| Beispiel 7 | Polyol 2 | Isocyanat 1 | 100:56 | 350 | Haut: 2893 | Haut: 109 | 0,26 |
| | | | | | Schaum: 1592 | Schaum: 112 | |
| Beispiel 8 | Polyol 2 + 30 GT | isocyanat 1 | 100:45 | 350 | Haut 1400 | Haut 52 | 0,23 |
| | Blähgraphit 2 | | | | Schaum: 994 | Schaum: 79 | |
| Beispiel 9 | Polyol 2 + 30 GT | Isocyanat 1 | 100:45 | 350 | Haut: 1583 | Haut 71 | 0,27 |
| | Blähgraphit 3 | | | | Schaum: 1166 | Schaum: 86 | |
| Beispiel 10 | polyol 2 | Isocyanat 1 | 100:56 | 500 | Haut: 4515 | Haut: 100 | 0,19 |
| | | | | | Schaum: 2206 | Schaum: 98 | |
| Beispiel 11 | Polyol 2 + 30 GT | Isocyanat 1 | 100:45 | 500 | Haut 3334 | Haut: 75 | 0,22 |
| | Blähgraphit 2 | | | | Schaum: 1832 | Schaum: 98 | |
| Beispiel 12 | Polyol 2 + 30 GT | Isocyanat 1 | 100:45 | 500 | Haut: 2699 | Haut: 53 | 0,19 |
| | Blähgraphit 3 | | | | Schaum: 1587 | Schaum: 84 | |
| Beispiel 13 | Polyol 3 | Isocyanat 2 | 115:35 | 105 | 188 | 149 | 0,72 |
| Beispiel 14 | Polyol 3 + 30 GT Blähgraphit | Isocyanat 2 | 145:35 | 105 | 149 | 83 | 0,88 |

## Patentansprüche

1. Verwendung von Blähgraphit mit einer Starttemperatur größer oder gleich 180 °C zur Erhöhung der Schallabsorption innerhalb eines mit dem Blähgraphit aufgeschäumten Schallabsorptionsschaumstoffs, wobei der Schaumstoff ein Polyurethanschaumstoff mit einer Dichte von größer oder gleich 150 g/l und kleiner oder gleich 350 g/l ist.

2. Verwendung nach Anspruch 1, **dadurch gekennzeichnet, dass** der Schallabsorptionsschaumstoff ein offenzelliger Schaumstoff ist.

3. Verwendung nach Anspruch 1, **dadurch gekennzeichnet, dass** der Schallabsorptionsschaumstoff, ein im Kernbereich offenzelliger Integralschaumstoff ist.

4. Verwendung nach einem der Ansprüche 1 bis 3, **dadurch gekennzeichnet, dass** der Schaumstoff eine Dichte von kleiner gleich 300 g/l besitzt.

5. Verwendung nach einem der Ansprüche 1 bis 4, **dadurch gekennzeichnet, dass** wenigstens 5 Gewichtsteile Blähgraphit auf 100 Gewichtsteile der isocyanatreaktiven Komponente des Polyurethans enthalten sind.

6. Verwendung nach Anspruch 5, **dadurch gekennzeichnet, dass** 5 bis 40 Gewichtsteile Blähgraphit auf 100 Gewichtsteile der isocyanatreaktiven Komponente, vorzugsweise auf 100 Gewichtsteile einer Polyol-Komponente, enthalten sind.

7. Verwendung nach einem der Ansprüche 1 bis 6, innerhalb eines Konstruktionsteils aus mehreren Schichten oder eines komplexen Bauteils.

8. Schallabsorber mit einem im Kernbereich offenzelligen Schallabsorptionsschaumstoff aus einem Polyurethan-Integralschaum, der **gekennzeichnet ist durch** eine Dichte ρ größer gleich 150 g/l und kleiner gleich 350 g/l sowie einen Gehalt von wenigstens 5 Gewichtsteilen Blähgraphit, der eine Starttemperatur größer oder gleich 180 °C besitzt, auf 100 Gewichtsteile an isocyanatreaktiver Komponente, insbesondere Polyol.

9. Schallabsorber nach Anspruch 8, **dadurch gekennzeichnet, dass** der Polyurethan-Integralschaum erhältlich ist aus einem reaktiven Polyol mit einer OH-Zahl kleiner 100, einem Isocyanat, zwischen 0 und 1 Gew.-% Wasser, zwischen 3 und 11 Gew.-% bevorzugt difunktionellen Kettenverlängerern, ggf. unter Zusatz weiterer Vernetzer, sowie gegebenenfalls Hilfs- und Zusatzstoffen.

10. Schallabsorber nach Anspruch 8 oder 9 **gekennzeichnet durch** ein gegebenenfalls bearbeitetes und/oder mit anderen Materialien verbundenes Polyurethan-Integralschaum-Formteil mit einer äußeren Verdichtungszone (Haut) von 0,5 bis 5 mm Dicke, welches in einem Bereich der Formteiloberfläche an einer einem Schallerzeuger zugewandten Seite, eine Haut mit einer Dicke kleiner oder gleich 0,1 mm aufweist.

11. Schallabsorber nach einem der Ansprüche 8 bis 10, **dadurch gekennzeichnet, dass** das Polyurethan-Integralschaum-Formteil in wenigstens einem Bereich der Formteiloberfläche an einer einem Schallerzeuger zugewandten Seite offenzellig vorliegt und keine Haut aufweist.

12. Schallabsorber nach einem der Ansprüche 8 bis 11, **dadurch gekennzeichnet, dass** es sich um eine Benzinpumpenabdeckung oder eine Motorraumabdeckung handelt.

13. Konstruktionsteil, das einen Schallabsorber nach einem der Ansprüche 8 bis 12 enthält.

## Claims

1. Use of expandable graphite having an initiation temperature of not less than 180°C for enhancing the degree of sound absorption within a soundabsorbing foam expanded with the expandable graphite, wherein the foam is a polyurethane foam having a density of not less than 150 g/l and not more than 350 g/l.

2. Use according to Claim 1, **characterized in that** the sound-absorbing foam is an open-cell foam.

3. Use according to Claim 1, **characterized in that** the sound-absorbing foam is an integral foam which is open-cell in the core region.

4. Use according to any one of Claims 1 to 3, **characterized in that** the foam has a density of not more than 300 g/l.

5. Use according to any one of Claims 1 to 4, **characterized in that** not less than 5 parts by weight of expandable graphite are included per 100 parts by weight of the isocyanate-reactive component of the polyurethane.

6. Use according to Claim 5, **characterized in that** from 5 to 40 parts by weight of expandable graphite are included per 100 parts by weight of the isocyanate-reactive component, preferably per 100 parts by weight of a polyol component.

7. Use according to any one of Claims 1 to 6 within an engineered part comprising two or more layers or within a complex component part.

8. Sound absorber comprising an integral soundabsorbing polyurethane foam which is open-cell in the core region, **characterized by** a density ρ of not less than 150 g/l and not more than 350 g/l and an inclusion of not less than 5 parts by weight of expandable graphite which has an initiation temperature of not less than 180°C per 100 parts by weight of isocyanate-reactive component, in particular polyol.

9. Sound absorber according to Claim 8, **characterized in that** the integral polyurethane foam is obtainable from a reactive polyol having an OH number below 100, an isocyanate, between 0 and 1 wt% of water, between 3 and 11 wt% of preferably difunctional chain extenders, optionally under admixture of further crosslinkers, and also, optionally, auxiliary and added-substance materials.

10. Sound absorber according to Claim 8 or 9, **characterized by** an integral polyurethane foam molding which is optionally machined and/or connected to other materials and which has an outer densification zone (skin) from 0.5 to 5 mm in thickness and which in a region of the molding surface on a side facing a sound generator has a skin not more than 0.1 mm in thickness.

11. Sound absorber according to any one of Claims 8 to 10, **characterized in that** the integral polyurethane foam molding has no skin and is open-cell in at least a region of the molding surface on a side facing a sound generator.

12. Sound absorber according to any one of Claims 8 to 11, **characterized in that** it comprises a gasoline pump cover or an engine compartment cover.

13. Engineered part comprising a sound absorber according to any one of Claims 8 to 12.

## Revendications

1. Utilisation de graphite expansible présentant une température de démarrage supérieure ou égale à 180°C pour augmenter l'absorption du bruit dans une mousse d'absorption du bruit, moussée à l'aide du graphite expansible, la mousse étant une mousse de polyuréthane présentant une densité supérieure ou égale à 150 g/l et inférieure ou égale à 350 g/l.

2. Utilisation selon la revendication 1, **caractérisée en ce que** la mousse d'absorption du bruit est une mousse à cellules ouvertes.

3. Utilisation selon la revendication 1, **caractérisée en ce que** la mousse d'absorption du bruit est une mousse à peau intégrée, à cellules ouvertes dans la zone du coeur.

4. Utilisation selon l'une quelconque des revendications 1 à 3, **caractérisée en ce que** la mousse présente une densité inférieure à 300 g/l.

5. Utilisation selon l'une quelconque des revendications 1 à 4, **caractérisée en ce qu'**elle contient au moins 5 parties en poids de graphite expansible pour 100 parties en poids du composant réactif avec isocyanate du polyuréthane.

6. Utilisation selon la revendication 5, **caractérisée en ce qu'**elle contient 5 à 40 parties en poids de graphite expansible pour 100 parties en poids du composant réactif avec isocyanate, de préférence pour 100 parties en poids d'un composant polyol.

7. Utilisation selon l'une quelconque des revendications 1 à 6, dans une pièce de construction constituée par plusieurs couches ou dans une pièce complexe.

8. Absorbant du bruit présentant une mousse absorbant le bruit, à cellules ouvertes dans la zone du coeur, en une mousse à peau intégrée en polyuréthane, qui est **caractérisé par** une densité p supérieure à 150 g/l et inférieure à 350 g/l ainsi que par une teneur d'au moins 5 parties en poids de graphite expansible, qui présente une température de démarrage supérieure ou égale à 180°C, pour 100 parties en poids de composant réactif avec isocyanate, en particulier de polyol.

9. Absorbant du bruit selon la revendication 8, **caractérisé en ce que** la mousse à peau intégrée de polyuréthane peut être obtenue à partir d'un polyol réactif présentant un indice d'OH inférieur à 100, d'un isocyanate, d'entre 0 et 1% en poids d'eau, d'entre 3 et 11% en poids d'agents d'allongement de chaîne de préférence difonctionnels, le cas échéant avec addition d'autres réticulants, ainsi que le cas échéant d'adjuvants et d'additifs.

10. Absorbant du bruit selon la revendication 8 ou 9, **caractérisé par** une pièce façonnée en mousse à peau intégrée en polyuréthane, le cas échéant usinée et/ou assemblée à d'autres matériaux, présentant une zone de compactage externe (peau) d'une épaisseur de 0,5 à 5 mm, qui présente dans une région de la surface du corps façonné, sur un côté orienté vers le générateur de bruit, une peau présentant une épaisseur inférieure ou égale à 0,1 mm.

11. Absorbant du bruit selon l'une quelconque des revendications 8 à 10, **caractérisé en ce que** la pièce façonnée en mousse à peau intégrée en polyuréthane se trouve, dans au moins une région de la surface de la pièce façonnée, sur un côté orienté vers le générateur du bruit, sous forme de cellules ouvertes et ne présente pas de peau.

12. Absorbant du bruit selon l'une quelconque des revendications 8 à 11, **caractérisé en ce qu'**il s'agit d'un recouvrement de pompe à essence ou d'un recouvrement de compartiment moteur.

13. Pièce de construction, qui contient un absorbant du bruit selon l'une quelconque des revendications 8 à 12.
